# FASCICULE DE BREVET EUROPEEN

(11) **EP 3 754 770 B1**
(45) Date de publication et mention de la délivrance du brevet: **26.01.2022**
(21) Numéro de dépôt: 20180607.2
(22) Date de dépôt: 17.06.2020
(51) Int. Cl.: H01M 8/0234, H01M 8/0239, H01M 8/0245

(54) **PROCEDE DE FORMATION D'UNE COUCHE MICROPOREUSE ELECTROCONDUCTRICE HYDROPHOBE UTILE A TITRE DE COUCHE DE DIFFUSION DE GAZ**
VERFAHREN ZUR BILDUNG EINER MIKROPORÖSEN HYDROPHOBEN ELEKTRISCHEN LEITERSCHICHT, DIE ALS GASDIFFUSIONSSCHICHT GENUTZT WERDEN KANN
METHOD FOR FORMING A HYDROPHOBIC ELECTRICALLY CONDUCTIVE MICROPOROUS LAYER FOR USE AS A GAS-DIFFUSION LAYER

(30) Priorité: 19.06.2019 FR 1906596
(43) Date de publication de la demande: 23.12.2020
(73) Titulaire: Commissariat à l'Energie Atomique et aux Energies Alternatives, 75015 Paris (FR)
(72) Inventeur: OZOUF, Guillaume, 38054 GRENOBLE CEDEX 09 (FR); FOUDA-ONANA, Frédéric, 38054 GRENOBLE CEDEX 09 (FR); PAUCHET, Joël, 38054 GRENOBLE CEDEX 09 (FR); PICARD, Lionel, 38054 GRENOBLE CEDEX 09 (FR)
(74) Mandataire: Nony

(56) Documents cités:
- ATANASOV VLADIMIR ET AL: "Phosphonic acid functionalized poly(pentafluorostyrene) as polyelectrolyte membrane for fuel cell application", JOURNAL OF POWER SOURCES, ELSEVIER SA, CH, vol. 343, 24 janvier 2017 (2017-01-24), pages 364-372, XP029918382, ISSN: 0378-7753, DOI: 10.1016/J.JPOWSOUR.2017.01.085
- KOZO MATSUMOTO ET AL: "Synthesis of proton-conducting block copolymer membranes composed of a fluorinated segment and a sulfonic acid segment", JOURNAL OF POLYMER SCIENCE PART A: POLYMER CHEMISTRY, vol. 46, no. 13, 1 juillet 2008 (2008-07-01), pages 4479-4485, XP055083630, ISSN: 0887-624X, DOI: 10.1002/pola.22783
- AGUDELO NATALIA A ET AL: "Effect of the preparation method on the morphology and proton conductivity of membranes based on sulfonated ABA triblock copolymers", JOURNAL OF MATERIALS SCIENCE, KLUWER ACADEMIC PUBLISHERS, DORDRECHT, vol. 54, no. 5, 14 novembre 2018 (2018-11-14), pages 4135-4153, XP036709827, ISSN: 0022-2461, DOI: 10.1007/S10853-018-3115-5 [extrait le 2018-11-14]

## Description

### Domaine technique

La présente invention concerne un procédé de formation d'une couche microporeuse électroconductrice apte à former une couche de diffusion de gaz à l'image de celles mises en œuvre dans les cellules constituant les piles à combustible.

### Technique antérieure

Pour rappel, une pile à combustible est formée par une unique cellule ou bien un empilement de plusieurs cellules de pile à combustible et une cellule est classiquement composée de deux électrodes séparées par un électrolyte échangeur d'ions, l'ensemble étant pris en sandwich entre deux plaques bipolaires. Typiquement, ces électrodes comprennent une couche active, chargée en catalyseur où se passe la réaction électrochimique, et une couche de diffusion de gaz. Cette couche de diffusion de gaz, insérée entre les couches actives (anode, cathode) et les canaux de distribution de réactifs (H₂, air ou O₂), consiste en une structure poreuse, électroconductrice, et est généralement à base de carbone. Elle assure de multiples rôles (contraintes mécaniques, transport O₂ et H₂ des canaux vers les couches actives, gestion de l'eau (liquide et/ou vapeur) de la cathode vers les canaux, transport des électrons...).

Ainsi, les performances d'une pile à combustible sont fortement conditionnées par les propriétés de la couche de diffusion de gaz, qui est déterminante d'une part pour l'alimentation de la couche active en combustible ou comburant, et d'autre part pour le transfert des électrons de la couche active à la plaque bipolaire.

Or, au cours de certaines réactions électrochimiques, de l'eau est formée, ce qui peut générer un phénomène de noyage préjudiciable aux performances de la pile à combustible. Plus précisément, lorsqu'un phénomène de noyage a lieu, la diffusion des gaz jusqu'à l'électrode est ralentie voire bloquée. Ce phénomène augmente en particulier lorsque les pores de la couche de diffusion de gaz se remplissent d'eau liquide et est donc exacerbé lorsque la cellule est soumise à une humidité relative plus élevée. Le courant maximal que peut fournir une cellule est donc dépendant du mécanisme de diffusion des gaz vers l'électrode.

Pour limiter l'effet indésirable de ce phénomène de noyage, il est déjà proposé d'utiliser, à titre de couche de diffusion de gaz, une couche microporeuse électroconductrice (MPL) hydrophobe supportée sur un substrat de type par exemple carbone fibreux.

Selon une première variante, cette couche microporeuse électroconductrice hydrophobe est composée de polytétrafluoroéthylène (PTFE) dans lequel sont dispersées des particules de carbone voire des fibres de carbone broyées ou élaborées en phase vapeur (FR 3 028 352) nécessaires à la conduction électrique. Elle est typiquement formée par dépôt sur un support carboné d'une dispersion de PTFE et de particules de carbone en solution aqueuse puis traitement thermique, de type frittage, du dépôt formé, à une température supérieure à 200°C, généralement de l'ordre de 350°C (FR 3 028 352). Pour des raisons évidentes, cette étape de frittage peut être contraignante en termes de coût et de mise en œuvre.

Dans une seconde variante, la dispersion déposée sur le support comprend un polymère de polyfluorure de vinylidène dissous dans un solvant organique (FR 2 755 541). La couche microporeuse (MPL) est alors obtenue par coagulation du dépôt formé selon un procédé d'inversion de phase permettant de contrôler les propriétés de la couche microporeuse (Bottino et al, International Journal of Hydrogen Energy, 40, 2015, 14690-14698). Cette variante de réalisation de formation d'une couche microporeuse électroconductrice hydrophobe, peut pour sa part, poser un souci d'inhomogénéité de surface de la couche.

Il demeure donc le besoin de disposer d'une méthode simple, peu coûteuse et en particulier industrialisable pour former une couche microporeuse électroconductrice compatible avec la diffusion de gaz mais en revanche hydrophobe. L'invention vise précisément à répondre à cette attente.

### Exposé de l'invention

Ainsi, la présente invention a pour premier objet un procédé utile pour former une couche microporeuse électroconductrice hydrophobe (MPL) en surface d'un support comprenant au moins les étapes consistant à :
(a) Disposer d'une dispersion non aqueuse de particules de carbone,
(b) Former un dépôt de cette dispersion en surface d'un support,
(c) Sécher le dépôt formé en étape (b) de manière à former ladite couche microporeuse, et le cas échéant,
(d) Laver ladite couche microporeuse obtenue à l'issue de l'étape (c),
caractérisé en ce que lesdites particules de carbone sont formulées dans ladite dispersion avec au moins un polymère polypentafluorostyrène en solution dans un solvant organique.

Au sens de l'invention, une couche est dite hydrophobe si la surface externe de son matériau constitutif est telle qu'une goutte d'eau déposée ne s'y étale pas. En particulier, l'interface liquide/gaz de la goutte d'eau forme un angle de contact avec la surface supérieur à 90°. Ce caractère hydrophobe est bien entendu également reproduit dans toute l'épaisseur de la couche, en particulier dans la porosité du matériau. Il peut notamment être contrôlé par analyse XPS de la surface d'une coupe transversale de cette couche.

Par « dispersion non aqueuse », on entend une dispersion de particules solides dans un solvant organique dénué d'eau ou à défaut contenant une très faible quantité d'eau.

Selon un autre de ses aspects, l'invention concerne une couche de diffusion de gaz obtenue à partir du procédé tel que défini précédemment.

Selon cet aspect, cette couche de diffusion de gaz est formée d'un support conducteur, par exemple carboné, revêtu d'une couche microporeuse électroconductrice hydrophobe conforme à l'invention.

Enfin, l'invention concerne l'utilisation d'une couche de diffusion de gaz conforme à l'invention, en particulier dans une cellule de pile à combustible, notamment dans une cellule de pile à combustible à membrane d'échange de protons.

D'autres caractéristiques, variantes et avantages des différents objets de l'invention ressortiront mieux à la lecture de la description, des exemples et des figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### Description détaillée

La présente invention a pour premier objet un procédé utile pour former une couche microporeuse électroconductrice hydrophobe (MPL) en surface d'un support comprenant au moins les étapes consistant à :
(a) Disposer d'une dispersion non aqueuse de particules de carbone,
(b) Former un dépôt de cette dispersion en surface d'un support,
(c) Sécher le dépôt formé en étape (b) de manière à former ladite couche microporeuse, et le cas échéant,
(d) Laver ladite couche microporeuse obtenue à l'issue de l'étape (c),
caractérisé en ce que lesdites particules de carbone sont formulées dans ladite dispersion avec au moins un polymère polypentafluorostyrène en solution dans un solvant organique.

Dans le cadre de l'invention, la dispersion non aqueuse disposée à l'étape (a) comprend une solution de polypentafluorostyrène dans un solvant organique, dans laquelle sont dispersées au moins des particules de carbone.

Les polymères polypentafluorostyrène (PPFS) sont des polymères intéressants pour leurs propriétés hydrophobes et leur grande stabilité mécanique.

Le polypentafluorostyrène convenant à l'invention possède une masse moléculaire moyenne en nombre Mn comprise entre 10000 g.mol⁻¹ et 1000000 g.mol⁻¹, de préférence entre 10000 g.mol⁻¹ et 100000 g.mol⁻¹, et plus préférentiellement comprise entre 12000 g.mol⁻¹ et 50000 g.mol⁻¹. Il possède en outre avantageusement une dispersité en masse D_{w} comprise entre 1 et 2,5.

La dispersité en masse D_{w} peut être calculée à partir de l'équation D_{w} = M_{w}/Mₙ avec M_{w} représentant la masse moléculaire moyenne en poids, et Mn représentant la masse moléculaire moyenne en nombre.

Les masses moléculaires moyennes en nombre Mn et en poids M_{w} peuvent notamment être déterminées par Chromatographie d'Exclusion Stérique (CES) à détection triple, par exemple à l'aide d'un dispositif de type Malvern Instruments Viskotek GPCMax Couplé à un TDA305 triple détecteur (RI/UV, IV, LALS/RALS) équipé en plus d'un système UV à barrette d'iode.

Ces polymères sont disponibles commercialement ou avantageusement peuvent être obtenus selon le protocole décrit en exemple 1 ci-après.

Selon un mode de réalisation avantageux de l'invention, le polypentafluorostyrène possède une masse moléculaire moyenne en nombre Mn de 36000 g.mol⁻¹ à 50000 g.mol⁻¹ et une dispersité en masse D_{w} de 1,6 à 2,5.

En ce qui concerne le solvant organique, il est précisément choisi de sorte à solubiliser le polypentafluorostyrène et à disperser les particules de carbone.

Par exemple, le solvant peut être choisi parmi les solvants aprotiques, en particulier parmi le chloroforme, le toluène, le fluorobenzène, le THF, le diméthylacétamide (DMAc), le N-méthyl-2-pyrrolidone (NMP) et le N,N-diméthylformamide.

Selon un mode préféré de réalisation, le polypentafluorostyrène est solubilisé dans le solvant N-méthyl-2-pyrrolidone (NMP).

Selon une variante de réalisation de l'invention, le polypentafluorostyrène est solubilisé dans le solvant à une concentration massique de 0,2% à 20%, de préférence de 0,5% à 10%, et plus préférentiellement de 0,5% à 3%.

Les particules de carbone de la dispersion sont dédiées à conférer à la couche microporeuse ses propriétés électroconductrices. Elles augmentent également la conductivité thermique permettant d'évacuer la chaleur produite dans la cellule de pile à combustible.

Avantageusement, ces particules de carbone présentent des dimensions inférieures au millimètre, de préférence inférieures à 250 µm voire pouvant varier de 20 à 50nm.

Les particules de carbone sont choisies parmi le noir de carbone, le charbon actif, le graphite, les nanotubes de carbone, les fibres de carbone, les fibres de carbone broyées, et leurs mélanges, de préférence le noir de carbone, les fibres de carbone et leurs mélanges.

Selon un mode de réalisation de l'invention, les particules de carbone comprennent au moins du noir de carbone.

Selon un autre mode de réalisation, les particules de carbone peuvent également être des fibres de carbone. Avantageusement, ces fibres de carbone sont élaborées en phase vapeur. En particulier, ces fibres peuvent comporter du carbone graphité. Elles sont caractérisées par une longueur de 1 à 50 µm et de préférence de 5 à 25 µm.

Par exemple, les fibres de carbone peuvent être des fibres VGCF^{®}. En particulier, les fibres de carbone réalisées en phase vapeur permettent d'augmenter les conductivités thermiques et électriques tout en limitant le nombre de craquelures se formant durant le séchage de la couche microporeuse.

Selon un mode de réalisation préféré, les particules de carbone sont un mélange de noir de carbone et de fibres de carbone, notamment élaborées en phase vapeur.

La composition de la dispersion, en particulier le rapport entre les particules de carbone, le polymère polypentafluorostyrène et le solvant, est ajustée afin d'obtenir une couche microporeuse comportant :
- une porosité adaptée à la diffusion du gaz et un transport des produits optimal,
- une résistivité électrique faible,
- une stabilité mécanique satisfaisante, et
- une conductivité thermique satisfaisante.

Notamment, la dispersion peut comprendre de 0,5% à 20% en poids de particules de carbone, de 0,2% à 20% en poids de polypentafluorostyrène, et de 60% à 99% en poids de solvant, de préférence de 1% à 10% en poids de particules de carbone, de 0,5% à 10% en poids de polypentafluorostyrène, et de 80% à 98,5% en poids de solvant, et plus préférentiellement de 3% à 7% en poids de particules de carbone, de 0,5% à 3% en poids de polypentafluorostyrène, et de 90% à 96,5% en poids de solvant, le solvant étant de préférence représenté par le N-méthyl-2-pyrrolidone.

La teneur en polymère dans la dispersion aqueuse peut varier entre 10% et 30% en poids par rapport au poids total de cette dispersion, exprimé en extrait sec.

Selon un autre mode de l'invention, les particules de carbone et le polypentafluorostyrène peuvent être mis en œuvre dans un rapport pondéral particules de carbone/polypentafluorostyrène de 2 à 10, de préférence de 3 à 7 et plus préférentiellement de 4 à 5.

Selon une variante de l'invention, les composants de la dispersion utilisée à l'étape (a) peuvent être dispersés au préalable par ultrasons ou avec un disperseur mécanique, par exemple de type rotor-stator. De préférence, la dispersion est préparée à l'aide d'un disperseur sous vide. En particulier, avant l'étape de dispersion, les différentes particules de carbone sont tout d'abord mélangées, puis le polypentafluorostyrène est ajouté, et enfin le solvant.

Au cours de l'étape (b), la dispersion est déposée en surface d'un support.

Le support est un substrat généralement composé de carbone conducteur électrique. En particulier, le support peut être formé de fibres de carbone, et de préférence être un papier, un feutre ou un tissu de carbone. Notamment, ce support a une épaisseur allant de préférence de 50 µm à 500 µm, et plus préférentiellement de 80 µm à 150 µm.

L'étape de dépôt permet de contrôler la quantité et l'homogénéité du dépôt formé à la surface du support.

Selon un mode de l'invention, le dépôt à l'étape (b) est réalisé par enduction. Par exemple, l'enduction peut être réalisée par trempage du support dans la dispersion ou par vaporisation de la dispersion sur le support. L'enduction peut également être réalisée au rouleau, à la racle, ou au couteau. Il peut également s'agir d'une enduction centrifuge. De préférence, l'enduction est réalisée à l'aide d'une barre, notamment d'une barre de hauteur 200 µm, et par exemple une barre « knife coating » de hauteur 200 µm.

Ce dépôt de la dispersion est réalisé à une température inférieure à 100°C et de préférence à température ambiante c'est-à-dire une température variant de 18 à 25°C.

A l'étape (c), le dépôt décrit précédemment est séché de manière à former la couche microporeuse attendue. Cette étape est en particulier nécessaire à l'obtention d'une couche microporeuse mécaniquement stable, électroconductrice et hydrophobe.

Dans le cadre de l'invention, la couche microporeuse est avantageusement obtenue à l'issue d'un séchage à l'étape (c) qui peut être réalisé à une température variant de 90°C à 115°C.

Avantageusement, le procédé selon l'invention ne nécessite pas d'étape de frittage.

Il est possible de sécher le dépôt dans une étuve, dans un four ou bien sur une plaque chauffante, en particulier sur une plaque à enduction. Selon le mode de chauffage retenu, le temps de séchage est variable. Néanmoins, il est généralement réalisé en moins de 5 heures, de préférence en 1 à 2 heures.

Le dépôt obtenu a avantageusement, après séchage, une épaisseur allant de 10 µm à 60 µm, de préférence de 10 µm à 30 µm.

Comme signifié précédemment, cette étape de séchage peut être suivie d'une étape de lavage (d) si nécessaire, afin d'éliminer les impuretés, le solvant résiduel ou bien les particules de carbone qui n'ont pas été liées par le polymère. En particulier, la couche microporeuse obtenue peut être lavée à l'eau, et de préférence à l'eau ultrapure.

Le support traité selon l'invention peut notamment être revêtu d'une couche microporeuse électroconductrice hydrophobe dont le grammage est compris entre 10 g/m² et 50 g/m², de préférence entre 15 g/m² et 40 g/m².

L'hydrophobicité peut notamment être caractérisée, en surface de la couche, avec le test de la goutte d'eau, détaillé dans les exemples ci-après.

Le support revêtu d'une couche microporeuse électroconductrice hydrophobe, ainsi obtenu par le procédé selon l'invention, est apte à former une couche de diffusion de gaz et donc être mis à profit pour les différentes fonctionnalités connues pour une telle couche.

En conséquence, l'invention concerne également une couche de diffusion de gaz obtenue selon le procédé de l'invention et son utilisation dans une cellule de pile à combustible, notamment dans une cellule de pile à combustible à membrane d'échange de protons.

En particulier, une cellule comportant une couche de diffusion de gaz selon l'invention peut atteindre des densités de courant élevées à humidité relative dans les gaz élevée, notamment à 100% d'humidité relative.

Une couche de diffusion de gaz selon l'invention, et notamment conforme à celle de l'ESSAI 1 dans les exemples, peut également présenter à 80°C et 1,5 bar une tension supérieure ou égale à 0,6 V à 20% d'humidité relative et à 50% d'humidité relative pour une densité de courant de 2 A/cm² et donc bien l'efficacité attendue.

### Brève description des dessins

[Fig 1] représente la courbe de polarisation de cellules comprenant une couche de diffusion de gaz sur support Toray TGP-H-060 conforme (ESSAI 1) ou non (ESSAI Témoin 2) à l'invention à une humidité relative de 20 %, une pression de 1,5 bar et une température de 80°C.
[Fig 2] représente la courbe de polarisation de cellules comprenant une couche de diffusion de gaz sur support Toray TGP-H-060 conforme (ESSAI 1) ou non (ESSAI Témoin 2) à l'invention à une humidité relative de 50 %, une pression de 1,5 bar et une température de 80°C.

Les exemples suivants sont fournis à des fins illustratives et non limitatives du domaine de l'invention.

### Exemples

### Matériels et méthodes

Les matières premières suivantes ont été utilisées :
- Support de fibres de carbone commercialisé sous la dénomination Toray TGP-H-060
- Noir de carbone Vulcan XC72^{®} d'extrait sec 99% commercialisé par la société Cabot
- Fibres de carbone VGCF^{®} d'extrait sec 99% commercialisées par la société Showa Denko
- Polytétrafluoroéthylène (PTFE) commercialisé par la société Sigma Aldrich.

Les performances électrochimiques ont été testées sur banc de test monocellule, simulant des conditions de fonctionnement, sur une surface de 25 cm². Les essais ont été effectués en considérant à titre d'électrodes des CCM (Catalyst Coated Membrane) commerciales GORE GFCGO113 A510.1 / M820.15 / C580.4. Ces CCM sont chargées en platine avec une concentration surfacique de 0,1 mg/cm² à l'anode et de 0,4 mg/cm² à la cathode.

Les courbes de polarisations sont mesurées dans l'air à 80°C et 1,5 bar à 20 % et 50% d'humidité relative (HR).

### Exemple 1

### Synthèse du poly(2,3,4,5,6-pentafluorostyrène) (PPFS)

Dans un ballon, 500 µL de TiCl₄ sont ajoutés à 6 ml de toluène. Le catalyseur est préparé en y ajoutant goutte à goutte une solution de 750 µL de triéthyl aluminium dans 6 mL de toluène. Le mélange est stabilisé pendant 30 minutes.

1,5 mL du système catalytique TiCl₄/AlEt₃ formé est ensuite ajouté en une fois à 3 mL de 2,3,4,5,6-pentafluorostyrène (PFS), commercialisé par la Société Sigma-Aldrich sous la référence 196916-25G (CAS : 653-34-9).

Le milieu est agité et porté à 70 °C pendant 12 heures puis à 120 °C pendant 36 heures.

Le produit obtenu est dissout dans du fluorobenzène puis le catalyseur est neutralisé avec de l'éthanol, puis filtré.

La solution de polymère est précipitée dans le méthanol.

Un rendement massique de 92 % est obtenu.

La masse moléculaire moyenne en nombre déterminé par Chromatographie d'Exclusion Stérique (CES) à détection triple est Mₙ = 24 kg/mol avec une dispersité en masse D_{w} = M_{w}/Mₙ = 1,6.

RMN ¹H (400 MHz ; THF-d₈ ; 298 K) : δ ppm 2,1 ; 2,5 ; 2,9.

RMN ¹³C (400 MHz ; THF-d₈ ; 298 K) : δ ppm 32,4 ; 37,3 ; 115 ; 136,1 ; 138,7 ; 141,3 ; 143,8 ; 146,2.

RMN ¹⁹F (400 MHz ; THF-d₈ ; 298 K) : δ ppm -143,8 (t, 2F) ; -157 (s, 1F) ; -163 (s, 1F).

### Exemple 2

### Préparation de couches microporeuses conformes ou non conformes à l'invention

Une dispersion de particules de carbone et de PPFS dans du NMP conforme à l'invention, ESSAI 1, de même qu'une dispersion non conforme, ESSAI Témoin 2, considérant le polytétrafluoroéthylène (PTFE) à la place du PPFS dans de l'eau, sont préparées comme suit :
Le noir de carbone (Vulcan XC 72^{®}) et les fibres de carbone élaborées en phase vapeur (VGCF^{®}) sont mélangés sous atmosphère contrôlée. Le polymère hydrophobe considéré est ensuite introduit puis le solvant (le NMP ou l'eau). Le mélange est alors dispersé au Dispermat à 6000 rpm sous vide (-0,9 bar) pendant 20 min pour former la dispersion.

Le tableau 1 ci-après renseigne pour chaque essai les proportions considérées pour chacune des dispersions exprimées en pourcentage massique par rapport à la masse totale de la dispersion ainsi que le support considéré.

**[Tableau 1]**

| | ESSAI 1 | ESSAI Témoin 2 |
|---|---|---|
| VGCF^{®} | 2,7 | 2,1 |
| Vulcan XC-72^{®} | 2,0 | 1,6 |
| PPFS | 1,0 | |
| PTFE | | 0,8 |
| NMP | qsp 100 | |
| Eau | | qsp 100 |
| Support | Toray TGP-H-060 | Toray TGP-H-060 |

Les dépôts des dispersions sont réalisés par enduction sur le support Toray TGP-H-060 pour les ESSAIS 1 et Témoin 2 en utilisant une barre « knife coating » de hauteur 200 µm à température ambiante.

Le dépôt de l'ESSAI 1 est laissé à température ambiante pendant 20 min, puis la plaque à enduction est chauffée à 95 °C pendant 1h30.

En revanche, le dépôt de l'ESSAI Témoin 2 est obtenu par frittage à 350°C sous air pendant 30 min.

Chaque couche obtenue après séchage est ensuite rincée à l'eau ultrapure trois fois pour obtenir la couche de diffusion de gaz formée du support et de la couche microporeuse (MPL).

### Exemple 3 :

### Caractérisation des couches microporeuses obtenues selon l'exemple 2

Les propriétés de surface des couches microporeuses obtenues en exemple 2 sont évaluées par dépôt d'une goutte d'eau. Tous les dépôts obtenus pour les différents essais présentent une surface hydrophobe. Il est en revanche à noter que cette propriété n'est accessible à l'ESSAI Témoin 2 qu'après traitement thermique.

Ces différentes couches microporeuses, formées sur le support de carbone, sont mises en œuvre à titre de couche de diffusion de gaz dans une cellule de pile à combustible et les performances électrochimiques des couches de diffusion de gaz ont également été testées selon le protocole décrit précédemment dans le chapitre matériels et méthodes.

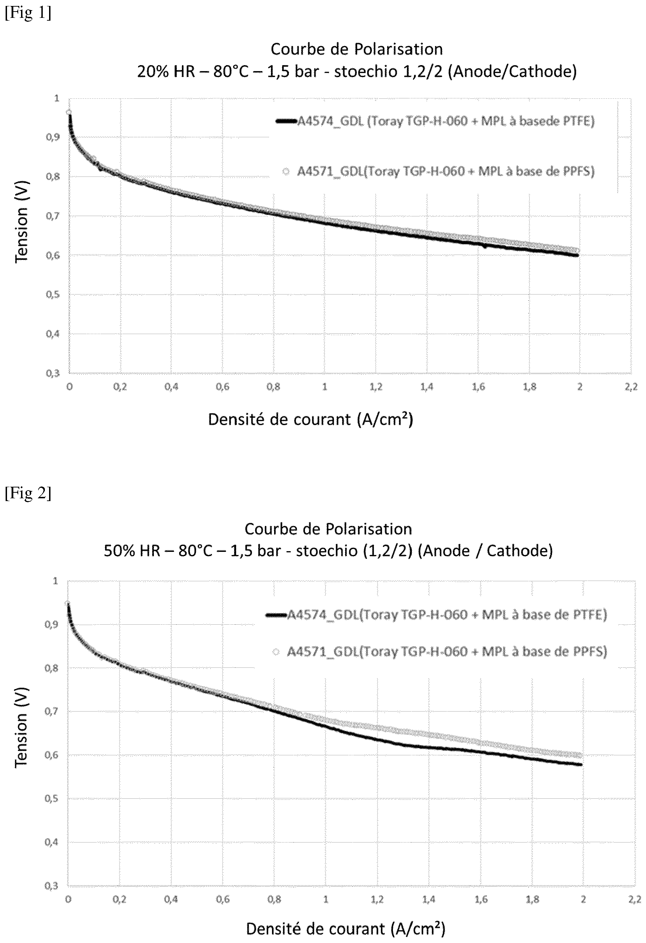

Les courbes de polarisation mesurées à 20% et 50% d'humidité relative sont illustrées respectivement en Figures 1 et 2 pour les couches microporeuses obtenues en Exemple 2 pour les ESSAIS 1 et Témoin 2. Les performances de ces deux couches microporeuses sur support Toray TGP-H-060 sont similaires, atteignant une densité de courant de 2 A/cm² pour une tension d'environ 0,6 V. Ainsi, le PPFS est bien une alternative au PTFE pour la préparation de couches microporeuses, pouvant être obtenues par un procédé à plus faible température et sans étape de frittage dans le cas du PPFS.

## Revendications

1. Procédé utile pour former une couche microporeuse électroconductrice hydrophobe (MPL) en surface d'un support comprenant au moins les étapes consistant à :
(a) Disposer d'une dispersion non aqueuse de particules de carbone,
(b) Former un dépôt de cette dispersion en surface d'un support,
(c) Sécher le dépôt formé en étape (b) de manière à former ladite couche microporeuse, et le cas échéant,
(d) Laver ladite couche microporeuse obtenue à l'issue de l'étape (c), **caractérisé en ce que** lesdites particules de carbone sont formulées dans ladite dispersion avec au moins un polymère polypentafluorostyrène en solution dans un solvant organique.

2. Procédé selon la revendication précédente dans lequel le polypentafluorostyrène est solubilisé dans le solvant N-méthyl-2-pyrrolidone (NMP).

3. Procédé selon l'une quelconque des revendications précédentes dans lequel le polypentafluorostyrène possède une masse moléculaire moyenne en nombre Mn comprise entre 10000 g.mol⁻¹ et 1000000 g.mol⁻¹, de préférence entre 10000 g.mol⁻¹ et 100000 g.mol⁻¹, et plus préférentiellement comprise entre 12000 g.mol⁻¹ et 50000 g.mol⁻¹.

4. Procédé selon l'une quelconque des revendications précédentes dans lequel le polypentafluorostyrène possède une masse moléculaire moyenne en nombre Mn de 36000 g.mol⁻¹ à 50000 g.mol⁻¹ et une dispersité en masse D_{w} de 1,6 à 2,5.

5. Procédé selon l'une quelconque des revendications précédentes dans lequel les particules de carbone sont choisies parmi le noir de carbone, le charbon actif, le graphite, les nanotubes de carbone, les fibres de carbone, les fibres de carbone broyées, et leurs mélanges, de préférence le noir de carbone, les fibres de carbone et leurs mélanges.

6. Procédé selon l'une quelconque des revendications précédentes dans lequel ladite dispersion comprend de 0,5% à 20% en poids de particules de carbone, de 0,2% à 20% en poids de polypentafluorostyrène, et de 60% à 99% en poids de solvant, de préférence de 1% à 10% en poids de particules de carbone, de 0,5% à 10% en poids de polypentafluorostyrène, et de 80% à 98,5% en poids de solvant, et plus préférentiellement de 3% à 7% en poids de particules de carbone, de 0,5% à 3% en poids de polypentafluorostyrène, et de 90% à 96,5% en poids de solvant.

7. Procédé selon l'une quelconque des revendications précédentes dans lequel les particules de carbone et le polypentafluorostyrène sont mis en œuvre dans un rapport pondéral particules de carbone/polypentafluorostyrène de 2 à 10, de préférence de 3 à 7 et plus préférentiellement de 4 à 5.

8. Procédé selon l'une quelconque des revendications précédentes **caractérisé en ce que** le séchage à l'étape (c) est réalisé à une température variant de 90°C à 115°C.

9. Procédé selon l'une quelconque des revendications précédentes **caractérisé en ce que** le dépôt à l'étape (b) est réalisé par enduction, de préférence à température ambiante.

10. Procédé selon l'une quelconque des revendications précédentes dans lequel ledit support est formé de fibres de carbone, et de préférence est un tissu, un feutre ou un papier de carbone.

11. Couche de diffusion de gaz formée d'un support conducteur revêtu d'une couche microporeuse électroconductrice hydrophobe obtenue à partir du procédé selon l'une quelconque des revendications 1 à 10.

12. Utilisation d'une couche de diffusion de gaz selon la revendication précédente dans une cellule de pile à combustible, notamment dans une cellule de pile à combustible à membrane d'échange de protons.

## Patentansprüche

1. Verfahren, das dazu dient, auf der Oberfläche eines Trägers eine hydrophobe elektrisch leitende mikroporöse Schicht (MPL) zu bilden, wobei es zumindest die folgenden Schritte umfasst:
(a) Bereitstellen einer nicht-wässrigen Dispersion von Kohlenstoffpartikeln,
(b) Bilden einer Abscheidung dieser Dispersion auf der Oberfläche eines Trägers,
(c) Trocknen der Abscheidung, welche im Schritt (b) gebildet wurde, sodass sich die mikroporöse Schicht bildet, sowie gegebenenfalls
(d) Waschen der mikroporösen Schicht, welche nach Abschluss des Schrittes (c) erhalten wurde,
**dadurch gekennzeichnet, dass** die Kohlenstoffpartikel in der Dispersion mit mindestens einem Polypentafluorstyrolpolymer formuliert sind, welches in Lösung einem organischen Lösungsmittel vorliegt.

2. Verfahren nach dem vorhergehenden Anspruch, wobei das Polypentafluorstyrol in dem Lösungsmittel N-Methyl-2-pyrrolidon (NMP) in Lösung gebracht ist.

3. Verfahren nach einem beliebigen der vorhergehenden Ansprüche, wobei das Polypentafluorstyrol ein Zahlenmittel des Molekulargewichts Mₙ im Bereich von 10.000 g.mol⁻¹ bis 1.000.000 g.mol⁻¹, vorzugsweise von 10.000 g.mol⁻¹ bis 100.000 g.mol⁻¹, und stärker bevorzugt im Bereich von 12.000 g.mol⁻¹ bis 50.000 g.mol⁻¹ besitzt.

4. Verfahren nach einem beliebigen der vorhergehenden Ansprüche, wobei das Polypentafluorstyrol ein Zahlenmittel des Molekulargewichts Mₙ von 36.000 g.mol⁻¹ bis 50.000 g.mol⁻¹ und eine massenbezogene Dispersität D_{w} von 1,6 bis 2,5 besitzt.

5. Verfahren nach einem beliebigen der vorhergehenden Ansprüche, wobei die Kohlenstoffpartikel aus Ruß, Aktivkohle, Graphit, Kohlenstoffnanoröhren, Kohlenstofffasern, gemahlenen Kohlenstofffasern und deren Mischungen, vorzugsweise aus Ruß, Kohlenstofffasern und deren Mischungen ausgewählt sind.

6. Verfahren nach einem beliebigen der vorhergehenden Ansprüche, wobei die Dispersion 0,5 % bis 20 % nach Gewicht an Kohlenstoffpartikeln, 0,2 % bis 20 % nach Gewicht an Polypentafluorstyrol und 60 % bis 99 % nach Gewicht an Lösungsmittel, vorzugsweise 1 % bis 10 % nach Gewicht an Kohlenstoffpartikeln, 0,5 % bis 10 % nach Gewicht an Polypentafluorstyrol und 80 % bis 98,5 % nach Gewicht an Lösungsmittel, und stärker bevorzugt 3 % bis 7 % nach Gewicht an Kohlenstoffpartikeln, 0,5 % bis 3 % nach Gewicht an Polypentafluorstyrol und 90 % bis 96,5 % nach Gewicht an Lösungsmittel umfasst.

7. Verfahren nach einem beliebigen der vorhergehenden Ansprüche, wobei die Kohlenstoffpartikel und das Polypentafluorstyrol in einem Gewichtsverhältnis von Kohlenstoffpartikel / Polypentafluorstyrol von 2 bis 10, vorzugsweise von 3 bis 7 und stärker bevorzugt von 4 bis 5 eingesetzt werden.

8. Verfahren nach einem beliebigen der vorhergehenden Ansprüche, **dadurch gekennzeichnet, dass** das Trocknen im Schritt (c) bei einer Temperatur mit einer Schwankungsbreite von 90 °C bis 115 °C durchgeführt wird.

9. Verfahren nach einem beliebigen der vorhergehenden Ansprüche, **dadurch gekennzeichnet, dass** die Abscheidung im Schritt (b) durch Beschichten hergestellt wird, vorzugsweise bei Raumtemperatur.

10. Verfahren nach einem beliebigen der vorhergehenden Ansprüche, wobei der Träger als Kohlenstofffasern gebildet ist, wobei es sich vorzugsweise um ein Gewebe, einen Filz oder ein Kohlenstoffpapier handelt.

11. Gasdiffusionsschicht, die aus einem leitfähigen Träger gebildet ist, welcher mit einer hydrophoben elektrisch leitenden mikroporösen Schicht überzogen ist, wie sie ausgehend von dem Verfahren gemäß einem beliebigen der Ansprüche 1 bis 10 erhalten wurde.

12. Verwendung einer Gasdiffusionsschicht gemäß dem vorhergehenden Anspruch in einer Brennstoffzelle, insbesondere in einer Brennstoffzelle mit Protonenaustauschmembran.

## Claims

1. Method useful for forming a hydrophobic electroconductive microporous layer (MPL) at the surface of a support, comprising at least the steps consisting in:
(a) providing a non-aqueous dispersion of carbon particles,
(b) forming a deposit of this dispersion at the surface of a support,
(c) drying the deposit formed in step (b) so as to form said microporous layer, and, where appropriate,
(d) washing said microporous layer obtained at the end of step (c), **characterized in that** said carbon particles are formulated in said dispersion with at least one polypentafluorostyrene polymer in solution in an organic solvent.

2. Method according to the preceding claim, wherein the polypentafluorostyrene is solubilized in the solvent N-methyl-2-pyrrolidone (NMP).

3. Method according to either one of the preceding claims, wherein the polypentafluorostyrene possesses a number-average molecular mass Mₙ of between 10 000 g.mol⁻¹ and 1 000 000 g.mol⁻¹, preferably between 10 000 g.mol⁻¹ and 100 000 g.mol⁻¹, and more preferentially between 12 000 g.mol⁻¹ and 50 000 g.mol⁻¹.

4. Method according to any one of the preceding claims, wherein the polypentafluorostyrene possesses a number-average molecular mass Mₙ of 36 000 g.mol⁻¹ to 50 000 g.mol⁻¹ and a mass dispersity D_{w} of 1.6 to 2.5.

5. Method according to any one of the preceding claims, wherein the carbon particles are selected from carbon black, activated carbon, graphite, carbon nanotubes, carbon fibres, ground carbon fibres and mixtures thereof, preferably carbon black, carbon fibres and mixtures thereof.

6. Method according to any one of the preceding claims, wherein said dispersion comprises from 0.5% to 20% by weight of carbon particles, from 0.2% to 20% by weight of polypentafluorostyrene, and from 60% to 99% by weight of solvent, preferably from 1% to 10% by weight of carbon particles, from 0.5% to 10% by weight of polypentafluorostyrene, and from 80% to 98.5% by weight of solvent, and more preferentially from 3% to 7% by weight of carbon particles, from 0.5% to 3% by weight of polypentafluorostyrene and from 90% to 96.5% by weight of solvent.

7. Method according to any one of the preceding claims, wherein the carbon particles and the polypentafluorostyrene are employed in a carbon particles/polypentafluorostyrene weight ratio of 2 to 10, preferably of 3 to 7 and more preferentially of 4 to 5.

8. Method according to any one of the preceding claims, **characterized in that** the drying in step (c) is carried out at a temperature ranging from 90°C to 115°C.

9. Method according to any one of the preceding claims, **characterized in that** the deposition in step (b) is carried out by coating, preferably at ambient temperature.

10. Method according to any one of the preceding claims, wherein said support is formed of carbon fibres, and preferably is a carbon fabric, felt or paper.

11. Gas diffusion layer formed of a conductive support coated with a hydrophobic electroconductive microporous layer obtained from the method according to any one of Claims 1 to 10.

12. Use of a gas diffusion layer according to the preceding claim in a fuel cell, especially in a proton exchange membrane fuel cell.
